# EUROPEAN PATENT APPLICATION

(11) **EP 4 576 270 A1**
(43) Date of publication of application: **25.06.2025**
(21) Application number: 23854830.9
(22) Date of filing: 08.08.2023
(51) Int. Cl.: H01M 4/62, H01M 4/13, H01M 4/139, H01M 10/052

(54) **ELECTRODE BINDER FOR LITHIUM-ION BATTERY**

(30) Priority: 15.08.2022 JP 2022129258; 15.08.2022 JP 2022129259
(71) Applicant: Kaneka Corporation, Osaka-shi, Osaka 530-8288 (JP)
(72) Inventor: TAKAMIDO, Seigo, Hyogo 676-8688 (JP)
(74) Representative: Vossius & Partner Patentanwälte Rechtsanwälte mbB
(86) International application number: PCT/JP2023/028868
(87) International publication number: WO 2024/038796

(57) **Abstract**

An electrode binder for a lithium-ion battery includes core-shell particles each of which includes a core and a shell layer located outside the core. The core is formed of rubber, and the shell layer is formed of a shell-forming polymer containing at least one type of monomer units selected from the group consisting of methacrylic acid units and (poly)alkylene glycol chain-containing (meth)acrylic ester units. The proportion of the methacrylic acid units in the shell-forming polymer is from 5 to 40 wt% or the proportion of the (poly)alkylene glycol chain-containing (meth)acrylic ester units in the shell-forming polymer is from 10 to 30 wt%.

## Description

### Technical Field

The present invention relates to: an electrode binder for a lithium-ion battery; an electrode of a lithium-ion battery and a method for producing the electrode; and a lithium-ion battery.

### Background Art

Lithium-ion batteries are characterized by being lightweight, having high energy density, and having the ability to repeat charge and discharge and have been used in a wide variety of applications such as being used as power sources of personal computers or smartphones or as drive sources of electric automobiles or hybrid vehicles.

A negative electrode of a lithium-ion battery includes a current collector such as a metal foil and an electrode active material layer formed on the current collector. The electrode active material layer is composed of an electrode active material such as graphite and a binder such as styrene/butadiene rubber (SBR). The electrode active material layer is usually produced by preparing a slurry through mixing of the electrode active material, the binder, and a solvent, applying the slurry to the current collector, and drying the slurry on the current collector.

The binder used in the electrode active material layer as described above is required to have the function of maintaining the adhesion (cohesion) between particles of the electrode active material and the adhesion between the electrode active material and the current collector. Improvements to the binder have been investigated to ensure the adhesion and at the same time improve the properties of a secondary battery.

For example, Patent Literature 1 describes the use of a particulate polymer as a binder for a secondary battery electrode. The particulate polymer contains monomer units derived from an aliphatic conjugated diene monomer such as butadiene and carboxylic group-containing monomer units or (meth)acrylic ester monomer units in given proportions.

Patent Literature 2 describes a particulate polymer having a core-shell structure as a binder for a secondary battery electrode. The core portion of the particulate polymer is formed of a polymer containing aliphatic conjugated diene monomer units and aromatic vinyl monomer units, and the shell portion of the particulate polymer is formed of a polymer containing 40 wt% or more of (meth)acrylic ester monomer units.

### Citation List

### Patent Literature

PTL 1: WO 2017/141791
PTL 2: WO 2017/056466

### Summary of Invention

### Technical Problem

A slurry containing a conventional binder cannot exhibit sufficient applicability when applied to a current collector, and the insufficient applicability could result in low smoothness of the surface of the electrode active material layer formed on the current collector.

In addition, it is desired for lithium-ion batteries to have a low internal resistance in order to maintain a high operating voltage.

In view of the above circumstances, the present invention aims to provide an electrode binder for a lithium-ion battery, the electrode binder being adapted to allow for good applicability to a current collector and enable a reduction in the internal resistance of the lithium-ion battery.

### Solution to Problem

As a result of intensive studies with the goal of solving the above problem, the present inventors have found that core-shell particles each of which has a core formed of rubber and a shell layer formed of a polymer containing particular monomer units can be used as an electrode binder for a lithium-ion battery to achieve the objective mentioned above. Based on this finding, the inventors have arrived at the present invention.

Specifically, the present invention relates to an electrode binder for a lithium-ion battery, the electrode binder including core-shell particles each of which includes a core and a shell layer located outside the core, wherein
the core is formed of rubber,
the shell layer is formed of a shell-forming polymer containing at least one type of monomer units selected from the group consisting of methacrylic acid units and (poly)alkylene glycol chain-containing (meth)acrylic ester units, and
a proportion of the methacrylic acid units in the shell-forming polymer is from 5 to 40 wt% or a proportion of the (poly)alkylene glycol chain-containing (meth)acrylic ester units in the shell-forming polymer is from 10 to 30 wt%.

### Advantageous Effects of Invention

The present invention can provide an electrode binder for a lithium-ion battery, the electrode binder being adapted to allow for good applicability to a current collector and enable a reduction in the internal resistance of the lithium-ion battery. A slurry containing the electrode binder according to the present invention has good applicability to a current collector and can thus be used to obtain an electrode active material layer having high surface smoothness.

According to a preferred aspect of the present invention, the adhesion between a current collector and an electrode active material layer can be improved. It is also possible to allow a lithium-ion battery to have good charge-discharge characteristics.

### Description of Embodiments

Hereinafter, an embodiment of the present invention will be described in detail.

An electrode binder for a lithium-ion battery according to the present embodiment (hereinafter also referred to as the "electrode binder") includes at least core-shell particles.

Each of the core-shell particles has a core-shell structure and includes a core formed of rubber and a shell layer located outside the core. The shell layer is formed of a shell-forming polymer.

When the core-shell particles having such a structure are used as an electrode binder for a lithium-ion battery, the lithium-ion battery can have a reduced internal resistance. Additionally, the adhesion between a current collector and an electrode active material layer of the lithium-ion battery can be improved.

### (Core)

The core is a rubber particle formed of rubber. The rubber is not limited to a particular type. In order to enhance the dispersibility of the core-shell particles in a slurry and the compatibility between the core-shell particles and a thickener and improve the adhesion between the current collector and the electrode active material layer, the rubber preferably contains aliphatic conjugated diene compound units and aromatic vinyl compound units. The rubber particles are not limited to being produced by a particular method but are preferably synthesized by emulsion polymerization.

The aliphatic conjugated diene compound refers to a diene compound which is aliphatic and has two conjugated carbon-carbon double bonds separated by one single bond. Specific examples of the aliphatic conjugated diene compound include isoprene, 1,3-butadiene, 2-methyl-1,3-butadiene, 2,3-dimethyl-1,3-butadiene, and 1,3-pentadiene. One aliphatic conjugated diene compound may be used alone or two or more aliphatic conjugated diene compounds may be used in combination. Among the compounds mentioned above, 1,3-butadiene is preferred.

The aromatic vinyl compound is not limited to a particular compound, and examples of the aromatic vinyl compound include: unsubstituted aromatic vinyl compounds such as styrene and 2-vinylnaphthalene; substituted aromatic vinyl compounds such as α-methylstyrene; ring-alkylated aromatic vinyl compounds such as 3-methylstyrene, 4-methylstyrene 2,4-dimethylstyrene, 2,5-dimethylstyrene, 3,5-dimethylstyrene, and 2,4,6-trimethylstyrene; ring-alkoxylated aromatic vinyl compounds such as 4-methoxystyrene and 4-ethoxystyrene; ring-halogenated aromatic vinyl compounds such as 2-chlorostyrene and 3-chlorostyrene; ring-esterified aromatic vinyl compounds such as 4-acetoxystyrene; and ring-hydroxylated aromatic vinyl compounds such as 4-hydroxystyrene. Among these, substituted or unsubstituted styrene compounds are preferred, styrene and/or α-methylstyrene is more preferred, and styrene is particularly preferred. One aromatic vinyl compound may be used alone or two or more aromatic vinyl compounds may be used in combination.

A typical example of the rubber forming the core is styrene-butadiene rubber. The styrene-butadiene rubber is a copolymer of 1,3-butadiene and styrene and also called "styrene rubber" or "SBR".

The rubber forming the core may contain no other vinyl monomer units in addition to the aliphatic conjugated diene compound units and the aromatic vinyl compound units or may contain other vinyl monomer units. Examples of vinyl monomers from which the other vinyl monomer units are derived include: (meth)acrylic acids and (meth)acrylic alkyl esters such as acrylic acid, methacrylic acid, ethyl acrylate, butyl acrylate, 2-ethylhexyl acrylate, methyl methacrylate, ethyl methacrylate, butyl methacrylate, 2-hydroxyethyl methacrylate, and glycidyl methacrylate; and unsaturated nitrile monomers such as acrylonitrile and methacrylonitrile.

It is preferable that the rubber forming the core should not contain any carboxy group-containing vinyl monomer units such as monomer units derived from acrylic acid, methacrylic acid, or itaconic acid.

The total proportion of the aliphatic conjugated diene compound units and the aromatic vinyl compound units in the total rubber forming the core is not limited to a particular range and may be, for example, from 80 to 100 wt%. The total proportion may be 90 wt% or more, 95 wt% or more, 98 wt% or more, or 99 wt% or more.

The rubber forming the core may be one resulting from polymerization using a polyfunctional monomer such as divinylbenzene, allyl methacrylate, ethylene glycol dimethacrylate, or 1,3-butylene dimethacrylate.

Furthermore, the rubber forming the core may be one resulting from polymerization using no chain transfer agent or may be one resulting from polymerization performed in the presence of a chain transfer agent. Examples of chain transfer agents that can be used include, but are not limited to: alkyl mercaptans such as n-dodecyl mercaptan, t-dodecyl mercaptan, t-decyl mercaptan, n-decyl mercaptan, and n-octyl mercaptan; and alkyl ester mercaptans such as 2-ethylhexyl thioglycolate.

In the rubber forming the core, the content ratio of the aliphatic conjugated diene compound to the aromatic vinyl compound is not limited to a particular range and may be, for example, in the range of 30:70 to 80:20. In terms of improvement in adhesion, reduction in internal resistance, and capacity retention after charge and discharge (cycle characteristics), the content ratio is preferably from 40:60 to 70:30, more preferably from 45:55 to 65:35, and even more preferably from 50:50 to 60:40.

The glass transition temperature (Tg) of the rubber is not limited to a particular range and may be, for example, in the range of -50 to +25°C. In terms of improvement in adhesion, reduction in internal resistance, and capacity retention after charge and discharge (cycle characteristics), the glass transition temperature is preferably from -40 to +20°C, more preferably from -30 to +15°C, even more preferably from -20 to +10°C, and particularly preferably from -15 to 0°C.

The glass transition temperature of the rubber can be controlled by changing the content ratio between the aliphatic conjugated diene compound units and the aromatic vinyl compound units in the rubber or changing the type or proportion of other monomer units which can be contained in the rubber. For example, the glass transition temperature of the rubber can be raised by increasing the proportion of the aromatic vinyl compound in the rubber.

The glass transition temperature can be measured by means of a differential scanning calorimeter (DSC).

The amount of the cores in the core-shell particles is not limited to a particular range. In terms of improvement in adhesion, reduction in internal resistance, and capacity retention after charge and discharge (cycle characteristics), the amount of the cores is preferably from 50 to 95 wt%, more preferably from 60 to 90 wt%, and even more preferably from 65 to 80 wt%.

### (Shell Layer)

The shell layer refers to a polymer layer located as the outer surface of each polymer particle and is also called a grafted layer. The shell layer is preferably grafted to the core. However, the polymer forming the shell layer may include a polymer not grafted to the core.

The shell layer covers the surface of the core. The shell layer is not limited to covering the entire surface of the core and may cover at least a portion of the surface of the core.

The polymer forming the shell layer (hereinafter also referred to as the "shell-forming polymer") is preferably a vinyl polymer.

The shell-forming polymer contains at least one type of monomer units selected from the group consisting of methacrylic acid units and (poly)alkylene glycol chain-containing (meth)acrylic ester units, although the monomer forming the shell-forming polymer is not limited to a particular compound and may be any vinyl monomer. It is inferred that since the shell layer has methacrylic acid units and/or (poly)alkylene glycol chain-containing (meth)acrylic ester units, the dispersibility of the core-shell particles in the slurry and the compatibility between the core-shell particles and a thickener can be enhanced to achieve highly homogeneous mixing of the core-shell particles and the thickener. This can improve the applicability of the slurry to the current collector. At the same time, the internal resistance of the lithium-ion battery can be reduced.

In contrast, the use of a carboxy group-containing vinyl monomer other than methacrylic acid (e.g., the use of acrylic acid or itaconic acid) results in insufficient applicability of the slurry to the current collector for some unclear reason, making it difficult to obtain an electrode active material layer having high surface smoothness.

The methacrylic acid units are used such that the proportion of the methacrylic acid units in the total shell-forming polymer is 5 wt% or more. If the proportion is less than 5 wt%, the use of the methacrylic acid units cannot provide a sufficient level of intended effect and fails to offer a satisfactory improvement in the applicability of the slurry to the current collector. The proportion is preferably 7 wt% or more.

The upper limit of the proportion of the methacrylic acid units in the shell-forming polymer is not limited to a particular value. In terms of polymerization stability in production of the core-shell particles, the proportion of the methacrylic acid units may be typically 40 wt% or less. In terms of reduction in internal resistance of the lithium-ion battery, the proportion is preferably 30 wt% or less, more preferably 25 wt% or less, even more preferably 20 wt% or less, particularly preferably 15 wt% or less, and most preferably 10 wt% or less. The proportion may be 9 wt% or less.

The term "(poly)alkylene glycol chain" is intended to include both an alkylene glycol chain having a degree of polymerization of 1 and a polyalkylene glycol chain having a degree of polymerization of 2 or more. That is, the "(poly)alkylene glycol chain" may be an alkylene glycol chain or a polyalkylene glycol chain.

The (poly)alkylene glycol chain is a monovalent group and has a free end group. The end group may be, but is not limited to, a hydroxy group or a substituent such as an alkyl, aryl, or acyl group. The number of carbon atoms in the substituent may be, for example, from about 1 to 20 and is preferably from about 1 to 10 and more preferably from about 1 to 6.

The number of carbon atoms per alkylene glycol unit of the (poly)alkylene glycol chain is not limited to a particular range but is preferably from 1 to 6, more preferably from 2 to 4, and even more preferably from 2 to 3. The (poly)alkylene glycol chain may contain two or more types of alkylene glycol units differing in the number of carbon atoms.

Specific examples of the (poly)alkylene glycol chain include a (poly)ethylene glycol chain, a (poly)propylene glycol chain, a (poly)ethylene glycol-(poly)propylene glycol chain, a (poly)ethylene glycol-(poly)butylene glycol chain, and a (poly)propylene glycol-(poly)butylene glycol chain. In particular, the (poly)alkylene glycol chain is preferably a (poly)ethylene glycol chain.

The degree of polymerization of the (poly)alkylene glycol chain, namely, the number of alkylene glycol units per (poly)alkylene glycol chain is not limited to a particular range and may be, for example, from about 1 to 30. The degree of polymerization is more preferably from 1 to 20, even more preferably from 1 to 15, and particularly preferably from 2 to 10. When the end group of the (poly)alkylene glycol chain is a hydroxy group, the degree of polymerization is preferably 3 or more and more preferably 4 or more. When the end group of the (poly)alkylene glycol chain is the substituent described above, the degree of polymerization is preferably 6 or more and more preferably 8 or more.

Specific examples of (meth)acrylic esters having a (poly)alkylene glycol chain the end group of which is a hydroxy group include: (poly)ethylene glycol (meth)acrylates such as Blemmer PE-90, PE-200, PE-350, AE-90U, AE-200, and AE-400 manufactured by NOF Corporation; (poly)propylene glycol (meth)acrylates such as Blemmer PP-500, PP-500D, PP-800, PP-1000, PP-2000D, AP-200, AP-400, AP-400D, AP-550, AP-800, and AP-1000D manufactured by NOF Corporation; (poly)ethylene glycol-(poly)propylene glycol (meth)acrylates such as Blemmer 50PEP-300 manufactured by NOF Corporation; (poly)ethylene glycol-(poly)butylene glycol (meth)acrylates such as Blemmer 55PET-800 and 50PEP-500D manufactured by NOF Corporation; and (poly)propylene glycol-(poly)butylene glycol (meth)acrylates such as Blemmer 10PPB-500B and 10PPB-500BD manufactured by NOF Corporation.

Specific examples of (poly)alkylene glycol chain-containing (meth)acrylic esters having a (poly)alkylene glycol chain the end group of which is the substituent described above include: methoxy (poly)ethylene glycol (meth)acrylates such as Blemmer PME-100, PME-200, PME-400, PME-1000, PME-2000, and AME-400 manufactured by NOF Corporation and NK ESTER M-20G, M-40G, M-90G, M-130G, M-230G, M-450G, AM-30G, AM-90G, AM-130G, and AM-230G manufactured by Shin-Nakamura Chemical Co., Ltd.; methoxy (poly)propylene glycol (meth)acrylates such as NK ESTER M-30PG and AM-30PG manufactured by Shin-Nakamura Chemical Co., Ltd.; lauroxy (poly)ethylene glycol (meth)acrylates such as Blemmer PLE-1300 manufactured by NOF Corporation; stearoxy (poly)ethylene glycol (meth)acrylates such as Blemmer PSE-1300 manufactured by NOF Corporation; octyl (poly)ethylene glycol-(poly)propylene glycol (meth)acrylates such as Blemmer 50POEP-800B manufactured by NOF Corporation; phenoxy (poly)ethylene glycol (meth)acrylates such as NK ESTER PHE-1G and AMP-30GY manufactured by Shin-Nakamura Chemical Co., Ltd.; phenoxy (poly)ethylene glycol-(poly)butylene glycol (meth)acrylates such as Blemmer 43PAEP-600B manufactured by NOF Corporation; nonylphenoxy (poly)propylene glycol (meth)acrylates such as Blemmer ANP-300 manufactured by NOF Corporation; and nonylphenoxy (poly)ethylene glycol-(poly)propylene glycol (meth)acrylates such as Blemmer 75ANEP-600 manufactured by NOF Corporation.

One of these monomers may be used alone or two or more thereof may be used in combination.

The (poly)alkylene glycol chain-containing (meth)acrylic ester is particularly preferably a (poly)alkylene glycol chain-containing methacrylic ester in order to raise the glass transition temperature of the shell-forming polymer.

The (poly)alkylene glycol chain-containing (meth)acrylic ester units are used such that the proportion of the (poly)alkylene glycol chain-containing (meth)acrylic ester units in the total shell-forming polymer is in the range of 10 to 30 wt%. If the proportion is less than 10 wt%, the use of the (poly)alkylene glycol chain-containing (meth)acrylic ester cannot provide a sufficient level of intended effect and fails to offer a satisfactory improvement in the applicability of the slurry to the current collector. If the proportion is more than 30 wt%, the internal resistance of the lithium-ion battery cannot be significantly reduced. The proportion is preferably from 10 to 25 wt%, more preferably from 10 to 20 wt%, and particularly preferably from 10 to 15 wt%.

Examples of monomers that are other than the methacrylic acid and the (poly)alkylene glycol chain-containing (meth)acrylic ester and that can be used to form the shell-forming polymer include, but are not limited to, a (meth)acrylic monomer and an aromatic vinyl monomer. The term "(meth)acryl" is used herein to collectively refer to "acryl" and "methacryl". Carboxy group-containing vinyl monomer units other than the methacrylic acid units may be used in combination with the methacrylic acid units and/or the (poly)alkylene glycol chain-containing (meth)acrylic ester units.

Examples of the (meth)acrylic monomer include, but are not limited to: (meth)acrylic alkyl esters such as methyl (meth)acrylate, ethyl (meth)acrylate, butyl (meth)acrylate, 2-ethylhexyl (meth)acrylate, octyl (meth)acrylate, dodecyl (meth)acrylate, stearyl (meth)acrylate, and behenyl (meth)acrylate; aromatic ring-containing (meth)acrylates such as phenoxyethyl (meth)acrylate and benzyl (meth)acrylate; hydroxyalkyl (meth)acrylates such as 2-hydroxyethyl (meth)acrylate and 4-hydroxybutyl (meth)acrylate; glycidyl (meth)acrylates such as glycidyl (meth)acrylate and glycidyl alkyl (meth)acrylates; alkoxyalkyl (meth)acrylates; (meth)acrylonitrile; substituted (meth)acrylonitrile; and (meth)acrylamide. Among these, (meth)acrylic alkyl esters are preferred and methacrylic alkyl esters are particularly preferred. One (meth)acrylic monomer may be used alone or two or more (meth)acrylic monomers may be used in combination.

Examples of the aromatic vinyl compound include, but are not limited to: unsubstituted aromatic vinyl compounds such as styrene and 2-vinylnaphthalene; substituted aromatic vinyl compounds such as α-methylstyrene; ring-alkylated aromatic vinyl compounds such as 3-methylstyrene, 4-methylstyrene, 2,4-dimethylstyrene, 2,5-dimethylstyrene, 3,5-dimethylstyrene, and 2,4,6-trimethylstyrene; ring-alkoxylated aromatic vinyl compounds such as 4-methoxystyrene and 4-ethoxystyrene; ring-halogenated aromatic vinyl compounds such as 2-chlorostyrene and 3-chlorostyrene; ring-esterified aromatic vinyl compounds such as 4-acetoxystyrene; and ring-hydroxylated aromatic vinyl compounds such as 4-hydroxystyrene. Among these, substituted or unsubstituted styrene compounds are preferred, styrene and/or α-methylstyrene is more preferred, and styrene is particularly preferred. One aromatic vinyl compound may be used alone or two or more aromatic vinyl compounds may be used in combination.

In terms of raising the glass transition temperature of the shell-forming polymer and reducing the internal resistance of the lithium-ion battery, the shell-forming polymer preferably contains methacrylic alkyl ester units and aromatic vinyl compound units in addition to the methacrylic acid units and/or the (poly)alkylene glycol chain-containing (meth)acrylic ester units. The number of carbon atoms in the alkyl of the methacrylic alkyl ester units is not limited to a particular range but is preferably from 1 to 6, more preferably from 1 to 3, and particularly preferably 1 or 2.

Furthermore, in order to achieve good electrolyte solution resistance and improve the charge-discharge characteristics of the lithium-ion battery, the proportion of the aromatic vinyl compound units in the total shell-forming polymer is preferably from 30 to 95 wt%, more preferably from 50 to 85 wt%, and even more preferably from 60 to 75 wt%. In terms of acceleration of the polymerization reaction for producing the shell-forming polymer and in terms of the dispersibility of the core-shell particles in the slurry and the applicability of the slurry to the current collector, the proportion of the methacrylic alkyl ester units in the total shell-forming polymer is preferably from 5 to 60 wt%, more preferably from 10 to 50 wt%, and even more preferably from 15 to 40 wt%.

The shell layer is preferably formed of an uncrosslinked polymer in terms of the dispersibility of the core-shell particles in the slurry and the applicability of the slurry to the current collector. The uncrosslinked polymer refers to a polymer that does not have any crosslinked structure, that does not contain any structural units derived from a crosslinkable monomer, and that is not classified as a rubber elastic material (such as butadiene rubber, styrene-butadiene rubber, or acrylic rubber).

In terms of making the core-shell particles more likely to retain their shape in the formed electrode active material layer and reducing the internal resistance of the lithium-ion battery, the glass transition temperature (Tg) of the shell-forming polymer is preferably 60°C or higher, more preferably 80°C or higher, even more preferably 90°C or higher, and particularly preferably 100°C or higher. The upper limit of the glass transition temperature is not limited to a particular value. The glass transition temperature may be, for example, 120°C or lower and is preferably 110°C or lower.

The glass transition temperature of the shell-forming polymer can be controlled by changing the types or proportions of the monomers forming the polymer. For example, the glass transition temperature of the shell-forming polymer can be raised by using a methacrylic monomer and an aromatic vinyl monomer as monomers forming the polymer.

The glass transition temperature can be measured by means of a differential scanning calorimeter (DSC).

The amount of the shell layers in the core-shell particles is not limited to a particular range. In terms of improvement in adhesion, reduction in internal resistance, and capacity retention after charge and discharge (cycle characteristics), the amount of the shell layers is preferably from 5 to 50 wt%, more preferably from 10 to 40 wt%, and even more preferably from 20 to 35 wt%.

Each of the core-shell particles may be composed only of the core and the shell layer. Each of the core-shell particles may further include a middle layer between the core and the shell layer insofar as the effect of the invention can be achieved. Preferably, the middle layer is formed of a polymer and grafted to the core. In the case where the core-shell particle includes such a middle layer, the middle layer covers at least a portion of the core, and the shell layer covers at least a portion of the surface of the middle layer.

### (Volume Mean Diameter of Core-Shell Particles)

The core-shell particles are not limited to having a particular particle size. For example, the volume mean diameter of the core-shell particles may be from about 10 to about 1000 nm. In terms of factors such as the dispersibility of the core-shell particles in the slurry, the miscibility of the core-shell particles with a thickener, and reduction in internal resistance of the lithium-ion battery, the volume mean diameter is preferably from 120 to 500 nm, more preferably from 150 to 400 nm, and even more preferably from 180 to 300 nm. The volume mean diameter of the core-shell particles is measured in a latex of the core-shell particles by means of a particle size analyzer. The particle size of the core-shell particles can be controlled by factors such as the type or amount of the polymerization initiator, chain transfer agent, redox agent, or emulsifier used in polymerization, the polymerization temperature, and the polymerization time.

### (Method for Producing Polymer Particles)

The production of the polymer particles is not limited to using a particular method. For example, emulsion polymerization, miniemulsion polymerization, microemulsion polymerization, or emulsifier-free (soap-free) emulsion polymerization can be used.

The emulsifier used in emulsion polymerization is not limited to a particular type. For example, an anionic surfactant, a non-ionic surfactant, a cationic surfactant, or an amphoteric surfactant can be used. A dispersant such as polyvinyl alcohol, alkyl-substituted cellulose, polyvinylpyrrolidone, or a polyacrylic acid derivative may be used in combination with the emulsifier.

Examples of the anionic surfactant mentioned as the emulsifier include, but are not limited to, the following compounds: fatty acid soaps such as potassium laurate, coconut fatty acid potassium salt, potassium myristate, potassium oleate, potassium oleate diethanolamine salt, sodium oleate, potassium palmitate, potassium stearate, sodium stearate, mixed fatty acid sodium soap, partially-hydrogenated tallow fatty acid sodium soap, and castor oil potassium soap; alkyl sulfate salts such as sodium dodecyl sulfate, sodium higher alcohol sulfate, triethanolamine dodecyl sulfate, ammonium dodecyl sulfate, sodium polyoxyethylene alkyl ether sulfate, triethanolamine polyoxyethylene alkyl ether sulfate, sodium polyoxyethylene alkyl phenyl ether sulfate, and sodium 2-ethylhexyl sulfate; sodium alkylbenzene sulfonates such as sodium dodecylbenzene sulfonate; sodium dialkyl sulfosuccinates such as sodium di-2-ethylhexyl sulfosuccinate; sodium alkyl naphthalene sulfonates; sodium alkyl diphenyl ether disulfonates; potassium alkyl phosphates; phosphate salts such as sodium polyoxyethylene lauryl ether phosphate; naphthalenesulfonic acid-formalin condensate sodium salt; polycarboxylic acid-type polymeric anions; sodium acyl (tallow)methyl taurate; sodium acyl (coco)methyl taurate; sodium cocoyl isethionate; α-sulfo fatty acid ester sodium salt; sodium amide ether sulfonate; oleyl sarcosine; sodium lauroyl sarcosinate; and rosin acid soap.

Examples of the non-ionic surfactant mentioned as the emulsifier include, but are not limited to, the following compounds: polyoxyethylene alkyl allyl ethers or polyoxyethylene alkyl ethers such as polyoxyethylene nonyl phenyl ether, polyoxyethylene oleyl ether, and polyoxyethylene lauryl ether; polyoxyethylene sorbitan esters such as polyoxyethylene sorbitan monolaurate and polyoxyethylene sorbitan monostearate; polyoxyethylene fatty acid esters such as polyethylene glycol monolaurate, polyethylene glycol monostearate, and polyethylene glycol monooleate; and oxyethylene/oxypropylene block copolymer.

Examples of the cationic surfactant mentioned as the emulsifier include, but are not limited to, the following compounds: alkylamine salts such as coconut amine acetate, stearylamine acetate, octadecylamine acetate, and tetradecylamine acetate; and quaternary ammonium salts such as lauryl trimethyl ammonium chloride, stearyl trimethyl ammonium chloride, cetyl trimethyl ammonium chloride, distearyl dimethyl ammonium chloride, alkylbenzyl dimethyl ammonium chloride, hexadecyl trimethyl ammonium chloride, and behenyl trimethyl ammonium chloride.

Examples of the amphoteric surfactant mentioned as the emulsifier include, but are not limited to, the following compounds: alkyl betaines such as lauryl betaine, stearyl betaine, and dimethyl lauryl betaine; sodium lauryl diaminoethyl glycine; amide betaine; imidazoline; and lauryl carboxymethyl hydroxyethyl imidazolinium betaine.

One of the emulsifiers mentioned above may be used alone or two or more thereof may be used in combination. Among the mentioned emulsifiers, sodium dialkyl sulfosuccinates or surfactants having an oxyethylene structure are preferred in terms of good fluidity of the resulting latex. Particularly preferred is sodium polyoxyethylene lauryl ether phosphate.

In the case of using emulsion polymerization, a known polymerization initiator such as 2,2'-azobisisobutyronitrile, hydrogen peroxide, potassium persulfate, or ammonium persulfate can be used as a thermally decomposable initiator.

A redox initiator may be used, and examples of the redox initiator include organic peroxides such as t-butylperoxyisopropyl carbonate, p-menthane hydroperoxide, cumene hydroperoxide, dicumyl peroxide, t-butyl hydroperoxide, di-t-butyl peroxide, and t-hexyl peroxide. The redox initiator may be one that combines an inorganic peroxide such as hydrogen peroxide, potassium persulfate, or ammonium persulfate with at least one selected from the group consisting of: a reductant such as sodium formaldehyde sulfoxylate or glucose; a transition metal salt such as iron(II) sulfate; a chelate agent such as disodium ethylenediaminetetraacetate; and a phosphorus-containing compound such as sodium pyrophosphate.

The use of the redox initiator is preferred since in this case the polymerization can be carried out at a low temperature at which the peroxide undergoes substantially no thermal decomposition and the polymerization temperature can be set over a wide range. In particular, an organic peroxide such as cumene hydroperoxide, dicumyl peroxide, or t-butyl hydroperoxide is preferably used as the redox initiator. The amount of the initiator used may be as known in the art. In the case of using the redox initiator, the amounts of the reductant, the transition metal salt, the chelate agent, and the phosphorus-containing compound may be as known in the art. In the case of polymerization of a polyfunctional monomer, a known chain transfer agent can be used in an amount as known in the art. A surfactant can be additionally used, and the amount of the surfactant may be as known in the art.

The solvent used in the emulsion polymerization may be any solvent in which the emulsion polymerization can proceed stably. For example, water is suitable for use as the solvent.

The temperature during the emulsion polymerization is not limited to a particular range and may be any temperature at which the emulsifier can be uniformly dissolved in the solvent. The temperature during the emulsion polymerization is, for example, from 40 to 75°C, preferably from 45 to 70°C, and more preferably from 49 to 65°C.

In the case where the core-shell particles are produced by emulsion polymerization, for example, a latex of the core-shell particles may be spray-dried to obtain a powder redispersible in water, and the powder may be used as the electrode binder.

The electrode binder according to the present embodiment may take the form of a latex of the core-shell particles or a powder of the core-shell particles. Having high dispersibility in a slurry, the electrode binder preferably takes the form of a latex of the core-shell particles.

### <Other Components>

The electrode binder according to the present embodiment may contain components such as a conductive additive, a reinforcing material, a leveling agent, a viscosity modifier, and an electrolyte additive in addition to the core-shell particles. These components are not limited to particular types and may be any kind of materials that do not affect the battery reactions. Known materials such as those mentioned in WO 2012/115096 can be used. Each of these components used may be a single material or a combination of two or more different materials.

### (Aqueous Slurry)

An aqueous slurry can be prepared by mixing the electrode binder according to the present embodiment, an electrode active material, a thickener, and an aqueous medium. An electrode active material layer can be formed on a current collector by applying the aqueous slurry to the surface of the current collector and drying the slurry on the surface of the current collector.

### <Amount of Core-Shell Particles in Slurry>

The amount of the core-shell particles in the slurry can be set as appropriate by those skilled in the art. In terms of improving the applicability of the slurry to the current collector and the adhesion between the current collector and the electrode active material layer, allowing the lithium-ion battery to have good charge-discharge characteristics, and reducing the internal resistance of the lithium-ion battery, the amount of the core-shell particles in the slurry is preferably from 0.1 to 5 parts by weight, more preferably from 0.3 to 3 parts by weight, and even more preferably from 0.5 to 2 parts by weight per 100 parts by weight of the electrode active material.

### <Thickener>

The thickener is a component that can enhance the dispersion stability of the electrode active material in the aqueous slurry and improve the applicability of the slurry. The thickener used can be a water-soluble polymer, specific examples of which include carboxymethylcellulose, methylcellulose, hydroxypropyl methylcellulose, hydroxyethyl methylcellulose, polyvinyl alcohol, polycarboxylic acids, salts of these polymers, and poly(meth)acrylamide. Examples of the polycarboxylic acids include polyacrylic acid, polymethacrylic acid, and alginic acid. One of the water-soluble polymers mentioned above may be used alone or two or more thereof may be used in combinations. Among the water-soluble polymers mentioned above, cellulose compounds are preferred, and carboxymethylcellulose or its salt is particularly preferred.

The amount of the thickener in the aqueous slurry may be set as appropriate. For example, the amount of the thickener in the aqueous slurry is preferably from 0.1 to 5 parts by weight, more preferably from 0.3 to 3 parts by weight, and even more preferably from 0.5 to 3 parts by weight per 100 parts by weight of the electrode active material.

<Negative Electrode Active Material>

Examples of electrode active materials that can be used in negative electrodes include a carbonic negative electrode active material, a metallic negative electrode active material, and a negative electrode active material combining the carbonic and metallic negative electrode active materials.

Examples of the carbonic negative electrode active material include a carbonaceous material and a graphitic material.

Examples of the carbonaceous material include an easily graphitizable carbon material whose carbon structure is easily changed at a heat treatment temperature and a hardly graphitizable carbon material typified by glassy carbon which has a nearly amorphous structure.

Examples of the easily graphitizable carbon material include carbon materials made from tar pitch obtained from petroleum or coal. Specific examples include coke, mesocarbon microbead (MCMB), mesophase pitch carbon fiber, and pyrolytic vapor-grown carbon fiber.

Examples of the hardly graphitizable carbon material include baked phenolic resin, polyacrylonitrile carbon fiber, quasi-isotropic carbon, baked furfuryl alcohol resin (PFA), and hard carbon.

Examples of the graphitic material include different kinds of graphite such as natural graphite and artificial graphite.

Examples of the metallic negative electrode active material include: lithium metal; elemental metals and their alloys that can form alloys with lithium (examples of the metals include Ag, Al, Ba, Bi, Cu, Ga, Ge, In, Ni, P, Pb, Sb, Si, Sn, Sr, Zn, and Ti); and oxides, sulfides, nitrides, silicides, carbides, and phosphides of the above-mentioned metals and their alloys. Among these, active materials containing silicon (silicon-containing negative electrode active materials) are preferred. The use of a silicon-containing negative electrode active material allows the lithium-ion battery to have a high capacity.

Examples of silicon-containing negative electrode active materials include silicon (Si), a silicon-containing alloy, SiO, SiOₓ, and a Si-containing material-electroconductive carbon composite obtained by coating or combining a Si-containing material with electroconductive carbon. One of these silicon-containing negative electrode active materials may be used alone or two or more thereof may be used in combination.

Examples of the silicon-containing alloy include an alloy composition containing silicon, aluminum, and a transition metal such as iron and further containing tin and a rare-earth element such as yttrium.

SiOₓ is a compound containing Si and at least one of SiO and SiO₂, and x is typically from 0.01 to less than 2.

Examples of the Si-containing material-electroconductive carbon composite include a compound produced by heat-treating a ground mixture containing SiO, a polymer such as polyvinyl alcohol, and optionally a carbon material in an atmosphere which contains, for example, an organic gas and/or steam. Alternatively, the composite can be obtained by a known method such as a method in which the surfaces of SiO particles are coated by chemical vapor deposition using an organic gas or the like or a method in which SiO particles and graphite or artificial graphite are combined into composite particles (granulation) by mechanochemical processing.

### <Positive Electrode Active Material>

Examples of electrode active materials that can be used in positive electrodes include transition metal-containing compounds such as a transition metal oxide, a transition metal sulfide, and a lithium-transition metal composite oxide. Examples of the transition metal include Ti, V, Cr, Mn, Fe, Co, Ni, Cu, and Mo.

Examples of the transition metal oxide include MnO, MnO₂, V₂O₅, V₆O₁₃, TiO₂, Cu₂V₂O₃, amorphous V₂O-P₂O₅, amorphous MoO₃, amorphous V₂O₅, and amorphous V₆O₁₃.

Examples of the transition metal sulfide include TiS₂, TiS₃, amorphous MoS₂, and FeS.

Examples of the lithium-transition metal composite oxide include a lithium-containing composite oxide having a layered structure, a lithium-containing composite oxide having a spinel-type structure, and a lithium-containing composite oxide having an olivine-type structure.

Examples of the lithium-containing composite oxide having a layered structure include lithium-containing cobalt oxide (LiCoO₂), lithium-containing nickel oxide (LiNiO₂), lithium-containing Co-Ni-Mn composite oxide, lithium-containing Ni-Mn-Al composite oxide, lithium-containing Ni-Co-Al composite oxide, and a solid solution of LiMaO₂ and Li₂MbO₃.

Examples of the lithium-containing composite oxide having a spinel-type structure include lithium manganate (LiMn₂O₄) and a compound resulting from substitution of part of Mn of lithium manganate (LiMn₂O₄) with another transition metal.

Examples of the lithium-containing composite oxide having an olivine-type structure include olivine-type lithium iron phosphate (LiFePO₄) and olivine-type lithium manganese phosphate (LiMnPO₄).

### <Conductive Additive>

The slurry may optionally contain a conductive additive. The conductive additive used is not limited to a particularly type and can be a known conductive additive. Specific examples include: electroconductive carbon materials such as acetylene black, Ketjen Black^{™}, carbon black, and graphite; and fibers or foils of various metals.

### <Additional Polymer>

The slurry may optionally contain a polymer other than the core-shell particles and the thickener described above. Examples of the polymer include fluorine-containing polymers and acrylonitrile polymers.

The solids concentration of the slurry is not limited to a particular range and may be, for example, from about 10 to about 80 wt%. The solids concentration is preferably from 30 to 70 wt%.

### <Preparation of Slurry>

The slurry can be prepared by dispersing the above-described components in an aqueous medium. Specifically, the slurry can be prepared by mixing the above-described components and the aqueous medium using a mixing machine such as a ball mill, a sand mill, a bead mill, a pigment disperser, a mortar mixer, an ultrasonic disperser, a homogenizer, a planetary mixer, or Filmix. The mixing of the above-described components and the aqueous medium can be typically performed in a temperature range of room temperature to 80°C for 10 minutes to several hours.

Water may typically be used as the aqueous medium. Alternatively, for example, an aqueous solution of a compound or a liquid mixture of a small volume of organic medium and water may be used. When the electrode binder is a latex of the core-shell particles, the water contained in the slurry may include water contained in the latex. The water contained in the slurry may include water contained in the thickener or any other component.

### (Lithium-Ion Battery Electrode)

A lithium-ion battery electrode according to the present embodiment includes a current collector and an electrode active material layer formed on the current collector. The electrode active material layer contains, at least, an electrode active material, a thickener, and core-shell particles. The lithium-ion battery electrode according to the present embodiment can be obtained by applying the above-described aqueous slurry to the current collector and drying the slurry on the current collector.

The current collector used may be a known metal foil, examples of which include a copper foil, an aluminum foil, a nickel foil, and a highly-conductive stainless steel foil.

The core-shell particles according to the present embodiment have a relatively strong tendency to retain their shape in the dried electrode active material layer. It is inferred that this tendency of the core-shell particles makes it possible to achieve bonding between particles of the electrode active material or between the electrode active material and the current collector by point joining and thus render the movement of lithium ions less likely to be disturbed by the presence of the binder, leading to reduction in internal resistance.

### [Application Step]

The application of the aqueous slurry to the current collector is not limited to using a particular method and can be performed using a known method, specific examples of which include doctor blade coating, dip coating, reverse roll coating, direct roll coating, gravure coating, extrusion coating, and brush coating. The slurry may be applied only to one side of the current collector or may be applied to both sides of the current collector. The thickness of the undried slurry coat applied to the current collector can be set as appropriate depending on the desired thickness of the electrode active material layer resulting from drying of the slurry coat.

### [Drying Step]

The drying of the slurry coat on the current collector is not limited to using a particular method and can be performed using a known method, examples of which include: drying by means of warm air, hot air, or low-humidity air; vacuum drying; and drying by means of infrared irradiation or electron irradiation.

After the drying step, the electrode active material layer may be pressed using a mold press or a roll press. This pressing can enhance the adhesion between the electrode active material layer and the current collector and reduce the porosity of the electrode active material layer.

The lithium-ion battery electrode according to the present embodiment can be produced also by powder molding. In the powder molding, first, the above-described slurry is prepared, and composite particles are prepared from the slurry. The composite particles are fed onto the current collector and molded by roll pressing as needed. In this manner, the electrode active material layer can be formed on the current collector.

The lithium-ion battery electrode according to a preferred aspect of the present embodiment is a negative electrode for a lithium-ion battery.

### (Lithium-Ion Battery)

A lithium-ion battery according to the present embodiment includes a positive electrode, a negative electrode, an electrolyte solution, and a separator, and at least one of the positive and negative electrodes (in particular, the negative electrode) is the lithium-ion battery electrode according to the present embodiment. When the negative electrode is the lithium-ion battery electrode according to the present embodiment, the positive electrode is not limited to a particular type and may be a known positive electrode.

### <Electrolyte Solution>

The electrolyte solution used can be, for example, a non-aqueous electrolyte solution containing a supporting electrolyte dissolved in a non-aqueous solvent. The supporting electrolyte used is typically a lithium salt. Examples of the lithium salt include LiPF₆, LiAsF₆, LiBF₄, LiSbF₆, LiAlCl₄, LiClO₄, CF₃SO₃Li, C₄F₉SO₃Li, CF₃COOLi, (CF₃CO)₂NLi, (CF₃SO₂)₂NLi, and (C₂F₅SO₂)NLi. Among these, LiPF₆, LiClO₄, and CF₃SO₃Li are preferred. One of the lithium salts mentioned above may be used alone or two or more thereof may be used in combination.

The non-aqueous solvent is not limited to a particular type and may be any non-aqueous solvent in which the supporting electrolyte is soluble. Examples of the non-aqueous solvent include: carbonates such as dimethyl carbonate (DMC), ethylene carbonate (EC), diethyl carbonate (DEC), propylene carbonate (PC), butylene carbonate (BC), and methyl ethyl carbonate (MEC); esters such as γ-butyrolactone and methyl formate; ethers such as 1,2-dimethoxyethane and tetrahydrofuran; and sulfur-containing compounds such as sulfolane and dimethylsulfoxide. Among these, carbonates are preferred since they have a high dielectric constant and are stable over a wide range of potentials. One non-aqueous solvent may be used alone or two or more non-aqueous solvents may be combined in any proportions.

The electrolyte solution may contain an additive. Examples of the additive include carbonate compounds such as vinylene carbonate (VC).

Examples of electrolytes that can be used instead of the electrolyte solution described above include: a polymer electrolyte such as polyethylene oxide or polyacrylonitrile; a gel polymer electrolyte consisting of the polymer electrolyte impregnated with an electrolyte solution; and an inorganic solid electrolyte such as LiI or Li₃N.

### <Separator>

The separator used is not limited to a particular type and can be a microporous membrane made of a polyolefin resin (such as polyethylene, polypropylene, polybutene, or polyvinyl chloride) which is an insulating material.

### <Method for Producing Lithium-Ion Battery>

One specific example of the method for producing the lithium-ion battery according to the present embodiment is a method in which: the positive electrode and the negative electrode are placed one on the other with the separator interposed therebetween; they are wound or folded together in conformity with the intended shape of the battery; the wound or folded assembly is placed into a battery enclosure; and the electrolyte solution is injected into the battery enclosure, the opening of which is sealed. If necessary, expanded metal, an overcurrent-preventing element such as a fuse or a PTC element, or a lead plate may be placed into the battery enclosure to prevent pressure increase inside the battery or overcharge/overdischarge of the battery. The lithium-ion battery may have any shape such as a coin shape, a button shape, a sheet shape, a cylindrical shape, a prismatic shape, or a flattened shape.

In the following items, preferred aspects of the present disclosure are listed. The present invention is not limited to the following items.

### [Item 1]

An electrode binder for a lithium-ion battery, the electrode binder including core-shell particles each of which includes a core and a shell layer located outside the core, wherein
the core is formed of rubber,
the shell layer is formed of a shell-forming polymer containing at least one type of monomer units selected from the group consisting of methacrylic acid units and (poly)alkylene glycol chain-containing (meth)acrylic ester units, and
a proportion of the methacrylic acid units in the shell-forming polymer is from 5 to 40 wt% or a proportion of the (poly)alkylene glycol chain-containing (meth)acrylic ester units in the shell-forming polymer is from 10 to 30 wt%.

### [Item 2]

The electrode binder according to item 1, wherein
the proportion of the methacrylic acid units in the shell-forming polymer is 20 wt% or less.

### [Item 3]

The electrode binder according to item 1 or 2, wherein
the shell-forming polymer further contains methacrylic alkyl ester units and aromatic vinyl compound units.

### [Item 4]

The electrode binder according to item 3, wherein
a proportion of the aromatic vinyl compound units in the shell-forming polymer is from 30 to 95 wt%.

### [Item 5]

The electrode binder according to any one of items 1 to 4, wherein
the shell-forming polymer has a glass transition temperature of 60°C or higher.

### [Item 6]

The electrode binder according to any one of items 1 to 5, wherein
the shell-forming polymer is an uncrosslinked polymer.

### [Item 7]

The electrode binder according to any one of items 1 to 6, wherein
the rubber contains aliphatic conjugated diene compound units and aromatic vinyl compound units.

### [Item 8]

The electrode binder according to any one of items 1 to 7, wherein
the rubber has a glass transition temperature of -30 to +15°C.

### [Item 9]

The electrode binder according to any one of items 1 to 8, wherein
a proportion of the cores in all of the core-shell particles is from 50 to 95 wt%.

### [Item 10]

The electrode binder according to any one of items 1 to 9, wherein
the core-shell particles have a volume mean diameter of 120 nm or more.

### [Item 11]

The electrode binder according to any one of items 1 to 10, wherein
the electrode binder is a latex of the core-shell particles.

### [Item 12]

A method for producing an electrode of a lithium-ion battery, the method including the steps of:
preparing a slurry containing an electrode active material, a thickener, and the electrode binder according to any one of items 1 to 11; and
applying the slurry to a current collector and drying the slurry on the current collector.

### [Item 13]

An electrode of a lithium-ion battery, the electrode including:
a current collector; and
an electrode active material layer formed on the current collector, wherein
the electrode active material layer contains an electrode active material, a thickener, and the electrode binder according to any one of items 1 to 12.

### [Item 14]

A lithium-ion battery including the electrode according to item 13.

### Examples

Hereinafter, the present invention will be described in more detail using examples. The present invention is not limited to the examples given below. Unless otherwise stated, the word "part(s)" as used below means "part(s) by weight" and the symbol "%" as used below means "wt%".

### (Example 1)

### (Formation of Core)

An amount of 10 g of disodium hydrogen phosphate (solids concentration = 10%) was introduced into 90 g of deionized water, and a solution of 0.237 g of iron(II) sulfate (FeSO₄•7H₂O) and 0.395 g of disodium ethylenediaminetetraacetate in 125.8 g of deionized water was added. The resulting mixture was deoxidized at -0.01 MPa for 15 minutes.

A 100-L pressure-resistant autoclave was charged with 66.7 g of NEOPELEX *G-15* (manufactured by Kao Corporation: sodium dodecylbenzene sulfonate, solids concentration = 15.0%), 11,000 g of butadiene, 9,000 g of styrene, and 150 g of t-dodecyl mercaptan, and the internal temperature of the autoclave was raised to 50°C.

An amount of 140.0 g of sodium formaldehyde sulfoxylate (solids concentration = 5%) and 7.7 g ofp-menthane hydroperoxide (solids concentration = 52%) were added to initiate polymerization.

At 15 hours after the initiation of the polymerization, the contents of the autoclave were degassed under reduced pressure to remove butadiene remaining unused in the polymerization and thus terminate the polymerization. As a result, a latex (solids concentration = 45.0%) containing styrene-butadiene rubber particles was obtained.

During the polymerization, sodium formaldehyde sulfoxylate, p-menthane hydroperoxide, iron(II) sulfate (FeSO₄•7H₂O), and disodium ethylenediaminetetraacetate were added into the 100-L pressure-resistant autoclave in given amounts and at given times.

### (Formation of Shell Layer)

An 8-L polymerization reactor was charged with 2333.3 g of the obtained rubber latex (solids concentration = 45.0%), and 60.0 g of sodium formaldehyde sulfoxylate (solids concentration = 5%) was added. A mixture of 300.0 g (20 parts) of styrene, 112.5 g (7.5 parts) of methyl methacrylate, 37.5 g (2.5 parts) of methacrylic acid, and 3.3 g of t-butyl hydroperoxide (solids concentration = 69%) was added into the polymerization reactor over 120 minutes.

Sodium formaldehyde sulfoxylate and t-butyl hydroperoxide were added as appropriate, and after 80 minutes the polymerization was terminated. As a result, a latex of core-shell-structured polymer particles was obtained. The conversion percentage was 100%, the solids concentration of the latex was 48.0%, and the volume mean diameter of the polymer particles was 200 nm.

The volume mean diameter was measured in the latex by means of NANOTRAC WAVE which is a nanoparticle size analyzer manufactured by Microtrac.

### (Examples 2 to 18 and Comparative Examples 2 to 5)

Latexes of core-shell-structured polymer particles were obtained in the same manner as the latex of Example 1, except that the volume mean diameter of the core-shell particles or the types or amounts of the monomers used to form the core and the shell layer were changed as shown in Table 1 or 2. The volume mean diameter was controlled by adjusting the amount of the emulsifier added at the initiation of polymerization.

### (Comparative Example 1)

### (Polymerization for Polymer Particle Formation)

An amount of 10 g of disodium hydrogen phosphate (solids concentration = 10%) was introduced into 90 g of deionized water, and a solution of 0.237 g of iron(II) sulfate (FeSO₄•7H₂O) and 0.395 g of disodium ethylenediaminetetraacetate in 125.8 g of deionized water was added. The resulting mixture was deoxidized at -0.01 MPa for 15 minutes.

A 100-L pressure-resistant autoclave was charged with 66.7 g of NEOPELEX *G-15* (manufactured by Kao Corporation: sodium dodecylbenzene sulfonate, solids concentration = 15.0%), 9,350 g of butadiene, 10,400 g of styrene, 250 g of methacrylic acid, and 150 g of t-dodecyl mercaptan, and the internal temperature of the autoclave was raised to 50°C.

An amount of 140.0 g of sodium formaldehyde sulfoxylate (solids concentration = 5%) and 7.7 g ofp-menthane hydroperoxide (solids concentration = 52%) were added to initiate polymerization.

At 15 hours after the initiation of the polymerization, the contents of the autoclave were degassed under reduced pressure to remove butadiene remaining unused in the polymerization and thus terminate the polymerization. As a result, a latex (solids concentration = 45.0%) containing styrene-butadiene rubber particles containing methacrylic acid units was obtained.

During the polymerization, sodium formaldehyde sulfoxylate, p-menthane hydroperoxide, iron(II) sulfate (FeSO₄•7H₂O), and disodium ethylenediaminetetraacetate were added into the 100-L pressure-resistant autoclave in given amounts and at given times.

### (Preparation of Slurry for Negative Electrode Fabrication)

A stirrer/defoamer (manufactured by Thinky Corporation under the trade name "Awatori Rentaro") was charged with 1 part by weight (solids weight) of a thickener (manufactured by Daicel Corporation under the trade name "CMC 2200"), 100 parts by weight (solids weight) of graphite serving as a negative electrode active material, and 100 parts by weight of water, and they were mixed by stirring at 2000 rpm for 5 minutes. After that, 1 part by weight (solids weight) of the polymer particles synthesized in a corresponding one of Examples or Comparative Examples was added into the stirrer/defoamer, the contents of which were further stirred at 2000 rpm for 5 minutes and then defoamed at 2200 rpm for 1 minute to obtain a slurry for negative electrode fabrication which had a solids concentration of 50%.

### (Fabrication of Negative Electrode)

A copper foil with a thickness of 17 µm was used as a current collector, to the surface of which the slurry for negative electrode fabrication was uniformly applied by doctor blade coating in such a manner that the dried layer would have a thickness of 80 µm. The slurry on the current collector was dried under vacuum at 80°C for 6 hours. After that, the dried negative electrode active material layer was pressed using a roll press machine to adjust the density of the negative electrode active material layer to 6.0 g/cm². As a result, a negative electrode composed of the current collector and the negative electrode active material layer formed on the surface of the current collector was obtained.

### (Evaluation of Applicability)

The surface of the dried negative electrode active material layer was visually inspected, and the applicability was rated based on the following criteria.

Good: The surface of the negative electrode active material layer has neither streaks nor patches.

Average: The surface of the negative electrode active material layer is free of streaks but has patches.

Poor: The surface of the negative electrode active material layer has streaks and patches.

### (Preparation of Slurry for Positive Electrode Fabrication)

A stirrer/defoamer (manufactured by Thinky Corporation under the trade name "Awatori Rentaro") was charged with 4 parts by weight (solids weight) of polyvinylidene fluoride, 4 parts by weight (solids weight) of acetylene black, 100 parts by weight (solids weight) of LiCoO₂ having a volume mean diameter of 15 µm and serving as a positive electrode active material, and 46 parts by weight of N-methylpyrrolidone, and they were mixed by stirring at 2000 rpm for 10 minutes, after which the resulting mixture was defoamed at 2200 rpm for 1 minute to obtain a slurry for positive electrode fabrication which had a solids concentration of 70%.

### (Fabrication of Positive Electrode)

An aluminum foil with a thickness of 15 µm was used as a current collector, to the surface of which the slurry for positive electrode fabrication was uniformly applied by doctor blade coating in such a manner that the dried layer would have a thickness of 80 µm. The slurry on the current collector was dried under vacuum at 80°C for 6 hours. After that, the dried positive electrode active material layer was pressed using a roll press machine to adjust the density of the positive electrode active material layer to 10.0 mg/cm². As a result, a positive electrode composed of the current collector and the positive electrode active material layer formed on the surface of the current collector was obtained.

### (Assembly of Lithium-Ion Battery)

A single-layer separator made of polypropylene (width = 65 mm, length = 500 mm, thickness = 20 µm; produced by a dry process; porosity = 60%) was prepared and cut to give a square piece with a size of 3 cm × 3 cm. An aluminum packaging material was prepared as a battery exterior material.

The positive electrode fabricated as described above was cut to give a square piece with a size of 2 cm × 2 cm. In a glove box purged with Ar to adjust the dew point to -80°C or lower, the square piece of positive electrode was placed on the aluminum packaging material, with the current collector's surface in contact with the aluminum packaging material. Next, the square piece of separator was placed on the surface of the positive electrode active material layer. Furthermore, the negative electrode fabricated as described above was cut to give a square piece with a size of 2.2 cm × 2.2 cm, and the square piece of negative electrode was placed on the separator, with the negative electrode active material layer's surface facing the separator. After that, a 1.0 M solution of LiPF₆ was injected as an electrolyte solution (the solvent was a mixture of ethylene carbonate and methyl ethyl carbonate at an ethylene carbonate/methyl ethyl carbonate volume ratio of 3/7, and 2 vol% (relative to the solvent) of vinylene carbonate was added as an additive). Furthermore, the aluminum packaging material was heat-sealed at 150°C to hermetically seal the opening of the aluminum packaging material. Thus, a laminate cell-type lithium-ion secondary battery was produced.

### (Peel Test for Negative Electrode)

The negative electrode fabricated as described above was cut to give a rectangular piece with a length of 30 mm and a width of 15 mm, and this rectangular piece was used as a test specimen. The test specimen was positioned with the negative electrode active material layer facing upward, and a cellophane tape (as specified in JIS Z 1522) was attached to the surface of the negative electrode active material layer. One end of the current collector was pulled in a perpendicular direction at a speed of 37.5 mm/min, and the stress was measured during the peeling process. The measurement was performed three times, and the average of the three measured values was determined as a T-peel strength.

### (Cycle Characteristics During Charge and Discharge)

The laminate cell-type lithium-ion secondary battery produced as described above was allowed to stand for 12 hours after the injection of the solution of LiPF₆ and then subjected to a charge-discharge cycle in which the battery was charged up to 4.2 V and discharged down to 2.5 V at a constant current rate of 0.2 C. This cycle was repeated 20 times in an environment at 25°C. The capacity at the first cycle, namely, the initial discharge capacity X1, was measured, and the discharge capacity X20 at the 20th cycle was also measured. The capacity retention expressed as X20/X1 × 100 (%) was determined as a measure of the charge-discharge cycle characteristics.

### (Measurement of DC Resistance During Charge and Discharge)

The laminate cell-type lithium-ion secondary battery produced as described above was charged at a current rate of 0.2 C for 2.5 hours in an environment at 25°C to adjust the depth of charge (state of charge (SOC) = 50%). After an interval of 1 hour, the open circuit voltage (OCV) at 1 hour after charge was measured, and the DC resistance (charge DCR) was calculated from the change in voltage during the 1-hour interval. The discharge DCR was also determined as follows. The battery was charged at a current rate of 0.1 C for 10 hours in an environment at 25°C and, after an interval of 1 hour, was discharged at a current rate of 0.1 C for 0.5 hours to adjust the depth of charge (state of charge (SOC) = 90%). After an interval of 1 hour, the open circuit voltage (OCV) at 1 hour after discharge was measured, and the DC resistance (discharge DCR) was calculated from the change in voltage during the 1-hour interval.

The results of the evaluations described above are listed in Table 1 or 2.

**[Table 1]**

| | | | Examples | | | | | | | | | | | | | |
|---|---|---|---|---|---|---|---|---|---|---|---|---|---|---|---|---|
| | | | 1 | 2 | 3 | 4 | 5 | 6 | 7 | 8 | 9 | 10 | 11 | 12 | 13 | 14 |
| Core | Butadiene/styrene weight ratio | | 55/45 | | | | | | | | | | | | | |
| | Proportion in all particles (wt%) | | 70 | | | | | | | | | 70 | 90 | 65 | 75 | 80 |
| | Tg (°C) | | -10 | | | | | | | | | | | | | |
| Shell layer | Constituent monomers (wt%) | Methyl methacrylate | 7.5 | 7.5 | 7.5 | 7.5 | 7.5 | 5 | 2.5 | 6.4 | 5.3 | 4.2 | 2.5 | 8.75 | 6.24 | 5 |
| | | Butyl acrylate | | | | | | | | 4 | 8 | 12 | | | | |
| | | Styrene | 20 | 20 | 20 | 20 | 20 | 20 | 20 | 17.1 | 14.2 | 11.3 | 6.67 | 23.33 | 16.68 | 13.33 |
| | | Methacrylic acid | 2.5 | 2.5 | 2.5 | 2.5 | 2.5 | 5 | 7.5 | 2.5 | 2.5 | 2.5 | 0.83 | 2.92 | 2.08 | 1.67 |
| | Tg (°C) | | 105 | 105 | 105 | 105 | 105 | 110 | 115 | 90 | 70 | 50 | 105 | 105 | 105 | 105 |
| Proportion of carboxy group-containing monomer in shell laver (wt%) | | | 8.3 | 8.3 | 8.3 | 8.3 | 8.3 | 16.7 | 25 | 8.3 | 8.3 | 8.3 | 8.3 | 8.3 | 8.3 | 8.3 |
| Particle size of core-shell particles (nm) | | | 200 | 130 | 170 | 230 | 250 | 200 | 200 | 200 | 200 | 200 | 200 | 200 | 200 | 200 |
| Applicability of slurry to current collector | | | Good | Good | Good | Good | Good | Good | Good | Good | Good | Good | Good | Good | Good | Good |
| Adhesion: T-peel strength (N/cm) | | | 1.81 | 1.68 | 1.78 | 1.82 | 1.81 | 1.78 | 1.77 | 1.79 | 1.82 | 1.8 | 1.81 | 1.45 | 1.59 | 1.74 |
| Resistance value during charge (Ω) | | | 20.5 | 23.3 | 20.7 | 20.1 | 21.1 | 23.4 | 28.7 | 22.3 | 24.5 | 26.5 | 22.9 | 20.8 | 22.1 | 21.4 |
| Resistance value during discharge (Ω) | | | 14.8 | 18.4 | 15.2 | 15.5 | 16.1 | 18.9 | 20.1 | 16.2 | 17.1 | 18.5 | 16.3 | 15.4 | 15.6 | 15.3 |

**[Table 2]**

| | | | Examples | | | | Comparative Examples | | | | |
|---|---|---|---|---|---|---|---|---|---|---|---|
| | | | 15 | 16 | 17 | 18 | 1 | 2 | 3 | 4 | 5 |
| Core | Butadiene/styrene weight ratio | | 70/30 | 45/55 | 65/35 | 40/60 | | 55/45 | | | |
| | Proportion in all particles (wt%) | | 70 | 85 | | 70 | | 85 | 70 | 70 | 70 |
| | Tg (°C) | | -40 | 5 | -25 | 15 | | -10 | -10 | -10 | -10 |
| Shell layer | Constituent monomers (wt%) | Methyl methacrylate | 7.5 | 3.75 | 3.75 | 7.5 | | 5 | 8.75 | 7.5 | 7.5 |
| | | Butyl acrylate | | | | | | | | | |
| | | Styrene | 20 | 10 | 10 | 20 | | 10 | 20 | 20 | 20 |
| | | Methacrylic acid | 2.5 | 1.25 | 1.25 | 2.5 | | | 1.25 | | |
| | | Acrylic acid | | | | | | | | 2.5 | |
| | | Itaconic acid | | | | | | | | | 2.5 |
| | Tg (°C) | | 105 | 105 | 105 | 105 | | 110 | 105 | | |
| Non-core-shell structure | Constituent monomers (wt%) | Butadiene | | | | | 46.75 | | | | |
| | | Styrene | | | | | 52 | | | | |
| | | Methacrylic acid | | | | | 1.25 | | | | |
| | Tg (°C) | | | | | | 18 | | | | |
| Proportion of carboxy group-containing monomer in shell layer (wt%) | | | 8.3 | 8.3 | 8.3 | 8.3 | - | 0 | 4.2 | 8.3 | 8.3 |
| Particles size of core-shell particles or non-core-shell particles (nm) | | | 200 | 200 | 200 | 200 | 200 | 200 | 200 | 200 | 200 |
| Applicability of slurry to current collector | | | Good | Good | Good | Good | Good | Poor | Average | Average | Average |
| Adhesion: T-peel strength (N/cm) | | | 1.69 | 1.45 | 1.76 | 1.33 | 1.35 | 1.34 | 1.68 | 1.78 | 1.77 |
| Resistance value during charge (Ω) | | | 24.5 | 21.9 | 23.3 | 22.2 | 30.4 | 26.7 | 23.4 | 21.5 | 22.9 |
| Resistance value during discharge (Ω) | | | 17.2 | 15.9 | 16.6 | 16.9 | 22.3 | 20.1 | 16.8 | 15.4 | 16.1 |

Tables 1 and 2 reveal that in Examples 1 to 18, where core-shell particles each of which had a core formed of rubber and a shell layer containing 5 to 40 wt% of methacrylic acid units were used as an electrode binder, the applicability to the current collector was good and the resistance value was low.

In Comparative Example 1, where polymer particles having no shell layer and made with rubber containing methacrylic acid units were used, the applicability was good but the resistance value was higher than in Examples.

In Comparative Examples 2 and 3, where the core-shell particles used had a core-shell structure but the shell layer contained no methacrylic acid units or a low proportion of methacrylic acid units, the applicability to the current collector was less satisfactory than in Examples.

The applicability to the current collector was unsatisfactory also in Comparative Examples 4 and 5 where the core-shell particles used had a shell layer formed using a carboxy group-containing monomer such as acrylic acid or itaconic acid instead of methacrylic acid.

### (Example 19)

### (Formation of Core)

A latex (solids concentration = 45.0%) containing styrene-butadiene rubber particles was obtained in the same manner as in Example 1.

### (Formation of Shell Layer)

An 8-L polymerization reactor was charged with 2266.7 g of the obtained rubber latex (solids concentration = 45.0%), and 30.0 g of sodium formaldehyde sulfoxylate (solids concentration = 5%) was added. A mixture of 117.0 g (9.75 parts) of styrene, 42 g (3.5 parts) of methyl methacrylate, 21.0 g (1.75 parts) of polyoxyethylene monomethacrylate (PEO-MMA, degree of polymerization = 4.5), and 1.7 g of t-butyl hydroperoxide (solids concentration = 69%) was added into the polymerization reactor over 60 minutes.

Sodium formaldehyde sulfoxylate and t-butyl hydroperoxide were added as appropriate, and after 80 minutes the polymerization was terminated. As a result, a latex of core-shell-structured polymer particles was obtained. The conversion percentage was 100%, the solids concentration of the latex was 48.0%, and the volume mean diameter of the polymer particles was 200 nm.

The volume mean diameter was measured in the latex by means of NANOTRAC WAVE which is a nanoparticle size analyzer manufactured by Microtrac.

### (Examples 20 to 23 and Comparative Examples 7 and 8)

Latexes of core-shell-structured polymer particles were obtained in the same manner as the latex of Example 19, except that the types or amounts of the monomers used to form the core and the shell layer were changed as shown in Table 3.

### (Comparative Example 6)

### (Polymerization for Polymer Particle Formation)

An amount of 10 g of disodium hydrogen phosphate (solids concentration = 10%) was introduced into 90 g of deionized water, and a solution of 0.237 g of iron(II) sulfate (FeSO₄•7H₂O) and 0.395 g of disodium ethylenediaminetetraacetate in 125.8 g of deionized water was added. The resulting mixture was deoxidized at -0.01 MPa for 15 minutes.

A 100-L pressure-resistant autoclave was charged with 66.7 g of NEOPELEX *G-15* (manufactured by Kao Corporation: sodium dodecylbenzene sulfonate, solids concentration = 15.0%), 11,000 g of butadiene, 9,000 g of styrene, and 150 g of t-dodecyl mercaptan, and the internal temperature of the autoclave was raised to 50°C.

An amount of 140.0 g of sodium formaldehyde sulfoxylate (solids concentration = 5%) and 7.7 g ofp-menthane hydroperoxide (solids concentration = 52%) were added to initiate polymerization.

At 15 hours after the initiation of the polymerization, the contents of the autoclave were degassed under reduced pressure to remove butadiene remaining unused in the polymerization and thus terminate the polymerization. As a result, a latex (solids concentration = 45.0%) containing styrene-butadiene rubber particles was obtained.

During the polymerization, sodium formaldehyde sulfoxylate, p-menthane hydroperoxide, iron(II) sulfate (FeSO₄•7H₂O), and disodium ethylenediaminetetraacetate were added into the 100-L pressure-resistant autoclave in given amounts and at given times.

The polymer particles synthesized in Examples 19 to 23 or Comparative Examples 6 to 8 were used to perform the previously-described evaluations. The results are listed in Table 3.

**[Table 3]**

| | | | Examples | | | | | Comparative Examples | | |
|---|---|---|---|---|---|---|---|---|---|---|
| | | | 19 | 20 | 21 | 22 | 23 | 6 | 7 | 8 |
| Core | Butadiene/styrene weight ratio | | 55/45 | | | | | | | |
| | Proportion in all particles (wt%) | | 85 | | | 70 | | 100 | 85 | |
| | Tg (°C) | | -10 | | | | | | | |
| Shell layer | Constituent monomers (wt%) | Methyl methacrylate | 3.5 | 2.625 | 1.75 | 7 | 3.5 | - | 5 | 4.75 |
| | | Styrene | 9.75 | 9.75 | 9.75 | 19.5 | 19.5 | - | 10 | 9.75 |
| | | PEO-MMA | 1.75 | 2.625 | 3.5 | 3.5 | 7 | - | | 0.5 |
| | Tg (°C) | | 90 | 78 | 65 | 90 | 65 | - | 105 | 100 |
| Proportion of PEO-MMA in shell layer (wt%) | | | 11.7 | 17.5 | 23.3 | 11.7 | 23.3 | - | 0 | 8.3 |
| Particle size of core-shell particles (nm) | | | 200 | 200 | 200 | 200 | 200 | - | 200 | 200 |
| Applicability of slurry to current collector | | | Good | Good | Good | Good | Good | Average | Average | Average |
| Adhesion: T-peel strength (N/cm) | | | 1.79 | 1.82 | 1.83 | 1.75 | 1.80 | 1.35 | 1.24 | 1.65 |
| Charge-discharge cycle characteristics: Capacity retention (%) | | | 100 | 100 | 100 | 100 | 100 | 100 | 97 | 98 |
| Resistance value during charge (Ω) | | | 10.5 | 13.4 | 14.5 | 9.8 | 13.3 | 30.4 | 28.5 | 25.6 |
| Resistance value during discharge (Ω) | | | 6.7 | 7.3 | 7.8 | 6.5 | 7.3 | 22.3 | 20.4 | 19.9 |

Table 3 reveals that in Examples 19 to 23, where core-shell particles each of which had a core formed of rubber and a shell layer containing 10 to 30 wt% of (poly)alkylene glycol chain-containing (meth)acrylic ester units were used as an electrode binder, the applicability to the current collector was good and the resistance value was low.

In Comparative Example 6, where polymer particles formed only of rubber and having no shell layer were used, the applicability to the current collector was less satisfactory and the resistance value was higher than in Examples.

Also in Comparative Example 7, where the core-shell particles used had a core-shell structure but the shell layer contained no (poly)alkylene glycol chain-containing (meth)acrylic ester units, the applicability to the current collector was unsatisfactory and the resistance value was high.

In Comparative Example 8, where the core-shell particles used had a shell layer containing (poly)alkylene glycol chain-containing (meth)acrylic ester units but the proportion of the (poly)alkylene glycol chain-containing (meth)acrylic ester units was low, the applicability to the current collector was unsatisfactory.

## Claims

1. An electrode binder for a lithium-ion battery, the electrode binder comprising core-shell particles each of which comprises a core and a shell layer located outside the core, wherein
the core is formed of rubber,
the shell layer is formed of a shell-forming polymer comprising at least one type of monomer units selected from the group consisting of methacrylic acid units and (poly)alkylene glycol chain-containing (meth)acrylic ester units, and
a proportion of the methacrylic acid units in the shell-forming polymer is from 5 to 40 wt% or a proportion of the (poly)alkylene glycol chain-containing (meth)acrylic ester units in the shell-forming polymer is from 10 to 30 wt%.

2. The electrode binder according to claim 1, wherein
the proportion of the methacrylic acid units in the shell-forming polymer is 20 wt% or less.

3. The electrode binder according to claim 1 or 2, wherein
the shell-forming polymer further comprises methacrylic alkyl ester units and aromatic vinyl compound units.

4. The electrode binder according to claim 3, wherein
a proportion of the aromatic vinyl compound units in the shell-forming polymer is from 30 to 95 wt%.

5. The electrode binder according to claim 1 or 2, wherein
the shell-forming polymer has a glass transition temperature of 60°C or higher.

6. The electrode binder according to claim 1 or 2, wherein
the shell-forming polymer is an uncrosslinked polymer.

7. The electrode binder according to claim 1 or 2, wherein
the rubber comprises aliphatic conjugated diene compound units and aromatic vinyl compound units.

8. The electrode binder according to claim 1 or 2, wherein
the rubber has a glass transition temperature of -30 to +15°C.

9. The electrode binder according to claim 1 or 2, wherein
a proportion of the cores in all of the core-shell particles is from 50 to 95 wt%.

10. The electrode binder according to claim 1 or 2, wherein
the core-shell particles have a volume mean diameter of 120 nm or more.

11. The electrode binder according to claim 1 or 2, wherein
the electrode binder is a latex of the core-shell particles.

12. A method for producing an electrode of a lithium-ion battery, the method comprising the steps of:
preparing a slurry containing an electrode active material, a thickener, and the electrode binder according to claim 1 or 2; and
applying the slurry to a current collector and drying the slurry on the current collector.

13. An electrode of a lithium-ion battery, the electrode comprising:
a current collector; and
an electrode active material layer formed on the current collector, wherein
the electrode active material layer contains an electrode active material, a thickener, and the electrode binder according to claim 1 or 2.

14. A lithium-ion battery comprising the electrode according to claim 13.
